# EUROPÄISCHE PATENTANMELDUNG

(11) **EP 2 210 831 A1**
(43) Veröffentlichungstag der Anmeldung: **28.07.2010**
(21) Anmeldenummer: 10004233.2
(22) Anmeldetag: 07.03.2006
(51) Int. Cl.: B65G 17/42, F16C 33/50, B65G 35/00, B65G 17/08, B65G 39/20

(54) **Fördervorrichtung und Förderkörper**

(30) Priorität: 11.03.2005 WO PCT/CH2005/000144; 20.05.2005 CH 8782005
(62) Teilanmeldung aus: 06705380.1
(71) Anmelder: WRH Walter Reist Holding AG, 8272 Ermatingen (CH)
(72) Erfinder: Reist, Walter, 8340 Hinwil (CH); Müller, Erwin, 8635 Dürnten (CH)
(74) Vertreter: Frei Patent Attorneys

(57) **Zusammenfassung**

Die Fördervorrichtung weist mehrere Förderkörper (102) auf, welche über mehrere Rollen an einer Führung abrollen, wobei die Rollen durch einen flexiblen Verbindungskörper miteinander verbunden und voneinander beabstandet sind.

Die Förderkörper (102) weisen Mittel (104,105) zur gegenseitigen Abstützung auf, welche eine Bewegung der Förderkörper (102) aus der Führung verhindern. Die Mittel zur gegenseitigen Abstützung (104,105) sind kugelförmige oder zylinderförmige Gelenkausbuchtungen (104) respektive Gelenkeinbuchtungen (105).

## Beschreibung

Die Erfindung liegt im Gebiet der Fördertechnik und bezieht sich auf eine Fördervorrichtung und einen Rollkörper sowie einen Förderkörper gemäss dem Oberbegriff der entsprechenden unabhängigen Patentansprüche.

Insbesondere betrifft die Erfindung Fördervorrichtungen zum Transport von einzelnen Objekten oder Schüttgut in einer fliessenden Förderbewegung. Dabei stellt sich unter anderem die Aufgabe, Fördervorrichtungen mit einfachen und kostengünstigen Mitteln zu realisieren.

Die Aufgabe wird gelöst durch eine Fördervorrichtung und einen Rollkörper sowie einen Förderkörper gemäss den entsprechenden unabhängigen Patentansprüchen.

Eine Fördervorrichtung gemäss der Erfindung weist mehrere Förderkörper auf, welche über mehrere Rollen an einer Führung abrollen, wobei die Rollen durch einen flexiblen Verbindungskörper miteinander verbunden und voneinander beabstandet sind.

Die Förderkörper weisen vorzugsweise Mittel zur gegenseitigen Abstützung auf, welche eine Bewegung der Förderkörper aus der Führung verhindern. Dadurch ist es möglich, dass weniger Rollen pro Förderkörper nötig sind, da nicht immer jeder Förderkörper durch mehrere Rollen pro Rollenkörper gehalten werden muss. Umgekehrt können bei gegebenem Rollenabstand kürzere Förderkörper verwendet werden, was wiederum kleinere Kurvenradien der Führung respektive der Fördervorrichtung erlaubt. Es bilden insbesondere also ein Verbindungskörper und zugeordnete Rollen einen Rollenkörper, wobei der Rollenkörper entlang der Förderrichtung durchschnittlich zwei oder weniger als zwei Rollen pro Förderkörper aufweist.

In einer bevorzugten Ausführungsform der Erfindung sind zwei Rollenkörper jeweils links und rechts einer Folge von Förderkörpern in der Führung angeordnet und stützen und führen die Förderkörper. Zusätzlich kann auch ein dritter Rollenkörper unterhalb der Förderkörper verlaufen und eine grössere Last in vertikaler Richtung aufnehmen. Ein Antrieb der Fördervorrichtung greift vorzugsweise an den Förderkörpern an, welche einander so durch Stossen weiterbewegen. An den Förderkörpern können verschiedenartige Mittel zum Transportieren von Fördergut angebracht sein.

Die Mittel zur gegenseitigen Abstützung sind vorzugsweise flexible Verbindungen zwischen den Förderkörpern, insbesondere eine durch eine Mehrzahl von Förderkörpern führende Seele, das heisst, ein durchgehendes flexibles Element. Alternativ können die Mittel, zur gegenseitigen Abstützung ineinanderpassende Ausformungen an den Förderkörpern sein. Vorzugsweise lassen diese Ausformungen ein beliebig weites Auseinanderziehen der Förderkörper in der Förderrichtung zu. Das heisst, dass die Förderkörper nur lose und trennbar miteinander verbunden sind, respektive einander nur stossen aber nicht ziehen können.

In einer bevorzugten Ausführungsform der Erfindung bilden die ineinanderpassenden Ausformungen, der Förderkörper ein Zylindergelenk oder ein Kugelgelenk.

In einer weiteren bevorzugten Variante der Erfindung weist die Fördervorrichtung mehrere Förderkörper auf, welche über mehrere Rollen an einer Führung abrollen, wobei
- die Förderkörper Mittel zur gegenseitigen Abstützung aufweisen, welche eine Bewegung der Förderkörper aus der Führung verhindern,
- wobei die Mittel zur gegenseitigen Abstützung ineinanderpassende Ausformungen an den Förderkörpern sind, und
- die ineinanderpassenden Ausformungen ein Auseinanderziehen der Förderkörper in der Förderrichtung zulassen, und
- die Rollen durch einen flexiblen Verbindungskörper miteinander verbunden und voneinander beabstandet sind.

In einer Untervariante dieser Variante bilden ein Verbindungskörper und zugeordnete Rollen einen Rollenkörper, und weist der Rollenkörper entlang der Förderrichtung durchschnittlich zwei oder weniger als zwei Rollen pro Förderkörper auf.

In einer weiteren Untervariante dieser Variante sind die Mittel zur gegenseitigen Abstützung flexible Verbindungen zwischen den Förderkörpern, insbesondere eine durch eine Mehrzahl von Förderkörpern führende Seele.

In einer weiteren Untervariante dieser Variante bilden die ineinanderpassenden Ausformungen der Förderkörper ein Zylindergelenk oder ein Kugelgelenk. Zwischen den verschiedenen Elementen der Fördervorrichtung, also Führungsschiene, Förderkörper und Rollenkörper, sowie innerhalb des Rollenkörpers ist ein Spiel respektive eine Beweglichkeit auch ausserhalb einer Hauptbewegungsrichtung zulässig. Das Spiel in Verbindung erlaubt eine vergleichsweise lose Verbindung der sich gegeneinander bewegenden Elemente und andererseits doch ein sauberes Abrollen von belasteten Rollen. Dank des Spieles des Rollenkörpers werden die Rollen lose gezogen und geführt, so dass eine geringe Reibung und weder ein gegenseitiges Abschleifen noch Verkanten oder Verklemmen aufgrund geringer Toleranzen auftritt.

In einer anderen Ausführungsform der Erfindung weist der Verbindungskörper auf: Haltebereiche, in welche die Rollen eingesetzt sind, und Gelenkbereiche, welche die Haltebereiche flexibel miteinander verbinden.

Die Förderkörper können Mittel zum zeitweisen Festhalten von zu fördernden Gegenständen aufweisen, beispielsweise Klammern oder Greifer. In einer anderen Ausführungsform der Erfindung laufen die Förderkörper um einen Zentralkörper um, so dass der Zentralkörper an einem Gegenkörper abrollen kann. Dabei dienen also die Rollen und Förderkörper einen Ersatz eines Rades für den Zentralkörper. Hier kann der Zentralkörper Mittel zum zeitweisen Festhalten von zu fördernden Gegenständen aufweisen.

Ein Rollenkörper für eine Fördervorrichtung weist eine Mehrzahl von linear miteinander verbundenen Rollen auf, wobei die Rollen durch einen flexiblen und insbesondere auch elastischen Verbindungskörper miteinander verbunden und voneinander beabstandet sind. Der Verbindungskörper bildet also einen beweglichen Lagerkäfig, auch Käfigband genannt. Dabei ist das Käfigband in einer bevorzugten Ausführungsform der Erfindung in mindestens zwei Richtungen biegbar. Dazu weist der Verbindungskörper vorzugsweise Haltebereiche auf, in welche die Rollen eingesetzt sind, und Gelenkbereiche, welche die Haltebereiche flexibel miteinander verbinden. Der Rollenkörper kann sich also nicht nur in einer ebenen Umlaufbahn bewegen, sondern auch entlang einer Umlaufbahn, die in einer gekrümmten Fläche verläuft. Mit anderen Worten: es ist der Rollenkörper in zwei Richtungen reversibel biegbar, wobei diese beiden Richtungen und eine Bewegungsrichtung des Rollenkörpers jeweils senkrecht zu einander sind.

Ein Rollenkörper mit einem solchen Käfigband oder Verbindungskörper lässt sich als standardisiertes Massenprodukt in beliebiger Länge herstellen und vielseitig in unterschiedlichen Fördervorrichtungen, Rollenelementen und Lagerungen aller Art einsetzen. Durch die nachfolgend beschriebene Verwendung von einstückigen, einfach geformten und einfach herzustellenden Komponenten und des Zulassens von Spiel in den Bewegungen können leichtlaufende Rollenkörper in sehr kostengünstiger Weise hergestellt werden.

Die Rollenkörper gemäss der Erfindung sind insbesondere in Fördervorrichtungen, wie sie in der Schweizerischen Patentanmeldung CH 456/04 18.03.2004 und der sich auf deren Priorität berufende internationalen Anmeldung PCT/CH 2005/000144 vom 11.03.2005 beschrieben sind, einsetzbar, sowie in Rollenelementen, wie sie in der Schweizerischen Patentanmeldung CH 884/04 vom 21.05.2004 und der sich auf deren Priorität berufende internationalen Anmeldung PCT/CH 2005/000288 vom 20.05.2005 beschrieben sind.

Ein Antrieb der Fördervorrichtung kann durch ein Band realisiert werden, welches gegen die Förderkörper gedrückt wird und/oder eine Folge von Förderkörpern entlang einer Krümmung der Förderbahn umschliesst. Ein Antrieb kann auch beispielsweise mit Antriebsnocken realisiert werden, die ein Stück weit entlang der Förderkörper geführt werden und an mehreren Förderkörpern angreifen. Ein solcher Antrieb kann durch ein angetriebenes Rollenelement realisiert werden, wie es in der Schweizerischen Patentanmeldung CH 885/04 vom 21.05.2004 und der sich auf deren Priorität berufende internationalen Anmeldung PCT/CH 2005/000289 vom 20.05.2005 beschrieben sind. Dabei greifen Rollen oder vorstehende Nocken eines umlaufenden Rollenkörpers des angetriebenen Rollenelementes in die Fördervorrichtung und insbesondere deren Förderkörper ein.

Der Inhalt der je drei zitierten Schweizer und Internationalen Anmeldungen wird hiermit durch Bezugnahme in die vorliegende Anmeldung aufgenommen.

In einer bevorzugten Ausführungsform der Erfindung ist der Verbindungskörper einstückig, z.B. aus einem Kunststoff geformt und sind die Rollen direkt oder über einen Lagerkörper oder Rollenring in den Verbindungskörper eingesetzt.

In einer anderen bevorzugten Ausführungsform der Erfindung sind die Rollen einstückig und walzenförmig, und sind und an den Innenseiten der Haltebereiche jeweils einander gegenüberliegende Lagerstellen geformt. An den Rollen sind insbesondere mit der Form der Lagerstellen korrespondierende, hervorstehende Achselemente geformt. Die Rollen sind mittels der Achselemente in die Lagerstellen eingesetzt. Der Begriff walzenförmig umfasst insbesondere die Form eines Kreiszylinders oder eines tonnenförmigen, ausgebauchten Zylinders oder eines eingebuchteten Zylinders. Die Rollen sind vorzugsweise einstückig und aus Metall oder Kunststoff geformt.

Umgekehrt können auch die Innenseiten der Haltebereiche jeweils einander gegenüberliegende, hervorstehende Lagervorsprünge aufweisen, und sind an den Rollen, vorzugsweise mit der Form der Lagerstellen korrespondierende, Einbuchtungen geformt. Damit sind die Rollen mittels der Einbuchtungen in die Lagervorsprünge einsetzbar.

Um das Einsetzen zu erleichtern sind die hervorstehenden Achselemente respektive die hervorstehenden Lagervorsprünge vorzugsweise sich verjüngend und insbesondere spitz zulaufend geformt.

In einer weiteren bevorzugten Ausführungsform der Erfindung sind die Rollen kugelförmig und sind die Rollen jeweils in Lagerkörpern eingeschnappt, welche im Verbindungskörper eingesetzt sind. Die Lagerkörper sind insbesondere Rollenringe, welche die Rollen umschliessen, so dass die Rollen auf zwei gegenüberliegenden Seiten an einem anderen Körper rollen können. Die Lagerkörper können aber auch die Rollen nur von einer Seite her teilweise umschliessen, so dass die Rollen an drei Seiten an anderen Körpern abrollen können.

Die Rollen bilden innerhalb des Rollenkörpers vorzugsweise eine einzelne lineare Folge oder Reihe von Rollen. Es können aber auch zwei oder mehr Reihen von Rollen im selben Rollenkörper nebeneinander angeordnet sein.

Weitere bevorzugte Ausführungsformen gehen aus den abhängigen Patentansprüchen hervor.

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Fördervorrichtung gemäss der Erfindung in einer Aufsicht;
- Figur 2: dieselbe Fördervorrichtung im Querschnitt;
- Figuren 3 und 4: eine weitere Fördervorrichtung in einer Aufsicht und im Querschnitt;
- Figur 5: eine Bewegung von Förderkörpern in einer gekrümmten Ausführungsform der weiteren Fördervorrichtung;
- Figur 6: entsprechende Förderkörper;
- Figur 7: eine Fördervorrichtung mit umlaufenden Förderkörpern;
- Figuren 8 und 9: Rollenkörper mit kugelförmigen Rollen;
- Figuren 10 bis 18: Rollenkörper mit walzenförmigen Rollen; und
- Figuren 19 bis 20: weitere Anwendungen von Rollenkörpern.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

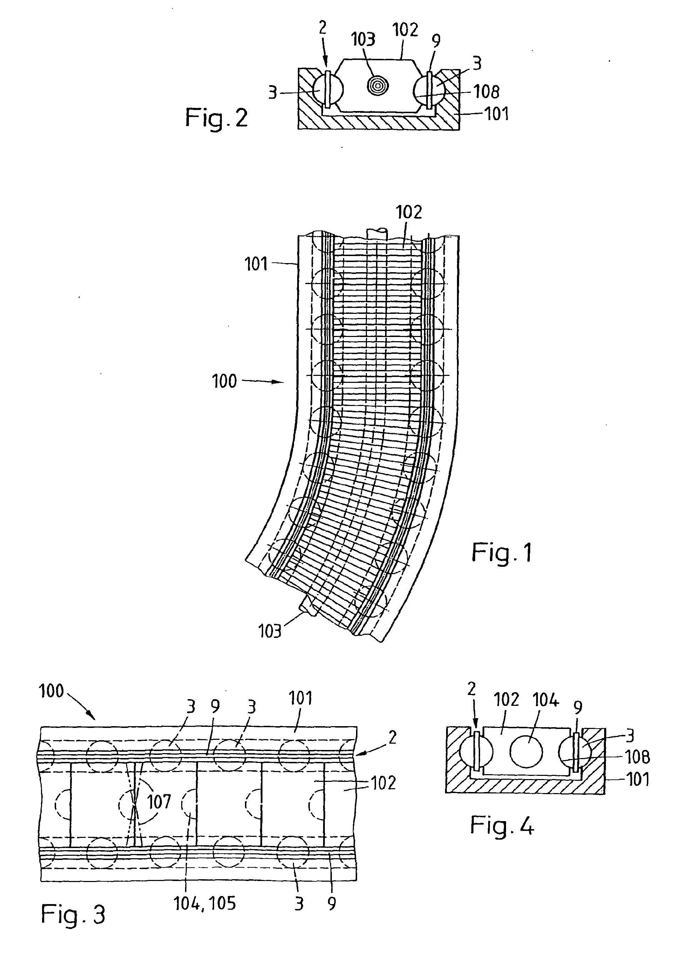

**Figur 1** zeigt eine Fördervorrichtung 100 gemäss der Erfindung in einer Aufsicht, und **Figur 2** im Querschnitt. In einer Führungsschiene 101 sind in Längsrichtung hintereinander mehrere Förderkörper 102 durch beidseitig verlaufende Rollenkörper 2 geführt und abgestützt. Die Förderkörper 102 weisen beiderseits je eine Führungsnut 108 auf, die mit der Form der Rollen 3 korrespondiert. Die Rollenkörper 2 weisen Verbindungskörper 9 und darin gelagerte Rollen 3 auf. Die Förderkörper 102 sind einzelne Blöcke oder aber Lamellen, wobei in der Längsrichtung jeweils mehrere Lamellen pro Rolle 3 vorliegen. Die Blöcke oder Lamellen sind durch eine Seele 103, d.h. ein die Förderkörper 102 durchlaufendes flexibles Seil, Kabel oder Monofilament miteinander verbunden. Dabei ist die Seele 103 lose durch die Förderkörper 102 geführt, oder ist die Seele 103 mit den Förderkörpern 102 verbunden, was eine Torsion der Förderkörper 102 um die Seele 103 einschränkt. In beiden Fällen stützt die Seele 103 die Förderkörper 102 in den Bereichen in welchen die Förderkörper 102 nicht durch den Rollenkörper 2 selber gestützt sind.

**Figuren 3** und **4** zeigen eine weitere Fördervorrichtung 100 in einer Aufsicht und im Querschnitt. Hier sind die Förderkörper 102 als Blöcke geformt. Es liegt in Längsrichtung rund ein Förderkörper 102 pro Rolle 3 vor. Damit die Förderkörper 102 nicht aus der Führungsschiene 101 herausfallen, sind die Förderkörper 102 mit Verbindungselementen 104, 105 zur gegenseitigen Abstützung versehen. Hier sind dies jeweils korrespondierend geformte Gelenkausbuchtungen 104 und Gelenkeinbuchtungen 105, wie anhand der folgenden Figuren erläutert wird.

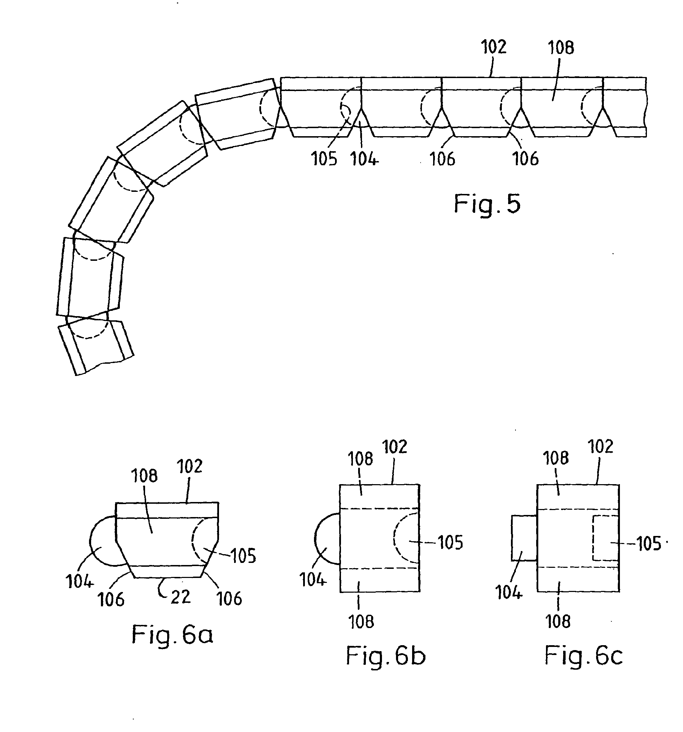

**Figur 5** zeigt eine Bewegung von Förderkörpern 102 in einer gekrümmten Ausführungsform der weiteren Fördervorrichtung 100. **Figur 6** zeigt entsprechende unterschiedliche Varianten einzelner Förderkörper 102 in einer gemeinsamen Seitenansicht 6a und in unterschiedlichen Aufsichten 6b, 6c. Die Gelenkausbuchtungen 104 und die Gelenkeinbuchtungen 105 sind kugelförmig **(****Figur 6b****)** oder zylinderförmig **(****Figur 6c****),** wobei jeweils eine Gelenkausbuchtung 104 eines Förderkörpers 102 in eine Gelenkeinbuchtung 105 eines anschliessenden Förderkörpers 102 passt. Die Förderkörper 102 weisen beiderseits je eine Führungsnut 108 auf, die mit der Form der Rollen 3 korrespondiert.

Die beiden Rollenkörper 2 der Fördervorrichtung 100 respektive ihre Bewegungsrichtung verlaufen somit in einer Ebene im wesentlichen parallel zu beiden Seiten der Förderkörper 102 und deren Bewegungsrichtung, wobei die Mittel 104, 105 zur gegenseitigen Abstützung eine Relativbewegung der Förderkörper 102 senkrecht zu dieser Ebene verhindern. Bei einer Krümmung der Führungsschiene 101 ist die Bewegungsrichtung als Tangentiale zu verstehen.

Um, wie in **Figur 5****,** eine Bewegung der Förderkörper 102 aus dieser Ebene heraus zu ermöglichen, weisen die Förderkörper 102 erste Abschrägungen 106 auf zwischen den Stirnseiten und einer Innenseite 22 auf. Diese Abschrägungen beginnen, in einer seitlichen Projektion wie in **Figur 5** oder **Figur 6a** zu sehen, am Ort der Zylinderachse respektive des Kugelmittelpunktes. Die ersten Abschrägungen 106 führen von da aus zur Innenseite 22 des Förderkörpers 102, so dass sich eine Folge von Förderkörpern 102 in Richtung ihrer Innenseiten 22 krümmen kann, wobei sich jeweils zwei Förderkörper 102 gegeneinander um das dazwischen liegende Gelenk 104, 105 drehen. Werden die Förderkörper 102 gegeneinander gedrückt, so liegen ihre Stirnflächen im oberen Teil satt aneinander an und verhindern ein Einknicken der Förderkörper 102 nach unten.

In einer weiteren bevorzugten Ausführungsform der Erfindung liegen zweite Abschrägungen 107 an der Stirnseite vor, welche eine Krümmung einer Folge von Förderkörpern 102 in derselben Ebene erlauben, entlang welcher Ebene sich die Förderkörper 102 und die seitlich der Förderkörper 102 verlaufenden Rollenkörper 2 bewegen. Dazu führen die zweiten Abschrägungen 107, in einer Projektion von oben, also in einer Ansicht wie bei den **Figuren 3****,** **6b** oder **6c****,** von einer Linie durch den Kugelmittelpunkt zu den Seiten links und rechts des Förderkörpers 102. Durch den Kontakt entlang dieser Linie ist die gegenseitige Abstützung der Förderkörper 102 gegen ein Einknicken nach unten weiterhin gewährleistet. Zweite Abschrägungen 107 sind beispielhaft in der **Figur 3** strichliert eingezeichnet.

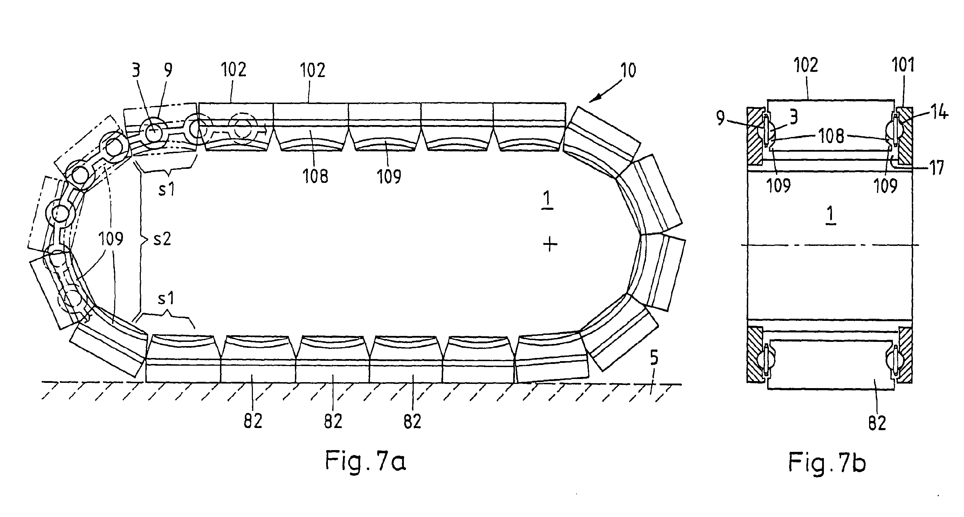

**Figur 7** zeigt eine Fördervorrichtung 100 mit umlaufenden Förderkörpern 102 in einer Seitenansicht 7a und im Querschnitt 7b. Die Förderkörper 102 verlaufen in einer Förderbahn 17 und sind seitlich durch einen Rollenkörper 2 mit kugelförmigen Rollen 3 in Lagernuten 14 der Förderbahn 17 gelagert. Alternativ zum Rollenkörper 2 mit Kugeln kann auch einer der weiter unten vorgestellten Rollenkörper 2 mit Walzen verwendet werden. Bei einer fest montierten Förderbahn 17 oder Führungsschiene ist die Anzahl der Förderkörper 102 in der Regel grösser als eingezeichnet und bildet so ein Förderband oder eine Förderkette. Dazu können die Förderkörper 102 z.B. mit Greifern versehen sein. Die Förderkörper 102 können durch ihre Bewegung Stück- oder Schüttgut transportieren.

In einer anderen Einsatzweise kann die Anordnung gemäss der **Figur 7** als Rollenelement 10 ausgebildet sein, welches über die Förderkörper 102, die dabei als Auflagekörper 82 funktionieren an einem strichliert eingezeichneten Gegenkörper 5 abrollen kann. Ein Zentralkörper 1 des Rollenelements 10 sowie damit verbundene Objekte können so als Ganzes bezüglich des Gegenkörpers 5 gefördert werden. Die Auflagekörper 82 und die Rollenkörper 2 ersetzten so eine Lagerung des Zentralkörpers 1 durch Räder.

Beim Übergang zwischen dem geraden Abschnitt und dem gekrümmten Abschnitt s2 mit einem bestimmten ersten Kurvenradius weist die Führungsschiene 101 vorzugsweise einen Zwischenabschnitt s1 mit einem grösseren Kurvenradius als dem ersten Kurvenradius auf. Dadurch wird verhindert, dass, wenn beim Einfahren eines Förderkörpers 102 in den gekrümmten Bereich der Förderkörper 102 abkippt, der nachfolgende Förderkörper 102 vom Zentralkörper 1 weg abgehoben wird.

In einer weiteren bevorzugten Ausführungsform der Erfindung ist ein Führungsvorsprung 109, der die Führungsnut 108 nach innen hin begrenzt, gekrümmt. Dadurch bilden in dem gekrümmten Bereich der Umlaufbahn 17 die aneinanderstossenden Führungsvorsprünge 109 zumindest annähernd ein Kreissegment, entlang welchem die Rollen 3 in einer regelmässigen Bewegung abrollen können.

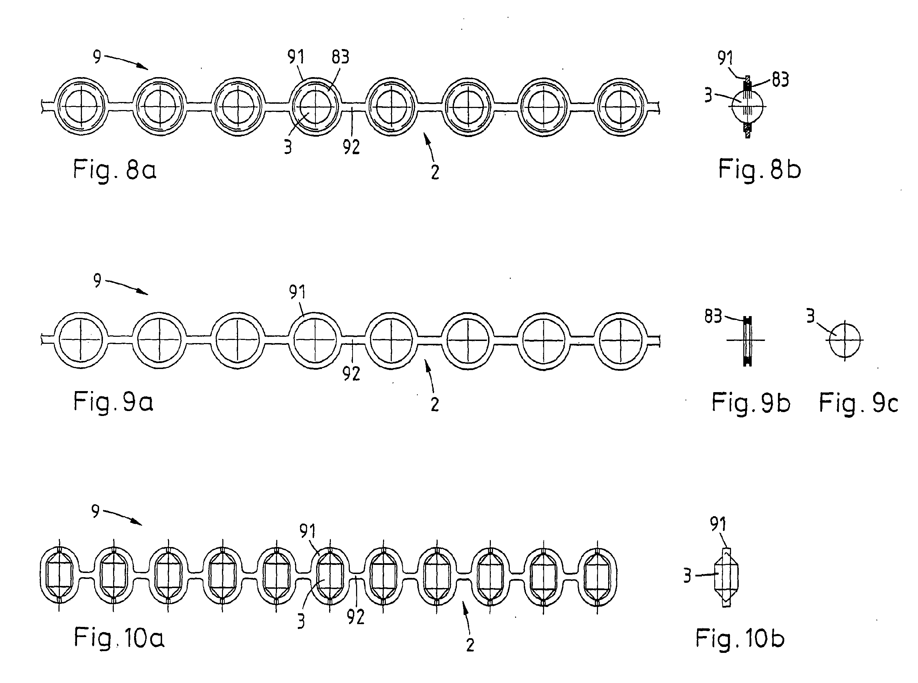

**Figuren 8** und **9** zeigen Rollenkörper 2 mit kugelförmigen Rollen. **Figuren 8a** und **8b** zeigen den kompletten Rollenkörper 2 in einer Aufsicht 8a und einem Querschnitt **8b.** **Figuren 9a, 9b** und **9c** zeigen einen Verbindungskörper 9 oder Käfigband, einen Rollenring 83 im Querschnitt und eine kugelförmige Rolle 3. Der Verbindungskörper 9 weist einerseits ringartige Haltebereiche 91 auf, in welche die Rollen 3 mittels der Rollenringe 83 eingesetzt sind, und andererseits Gelenkbereiche 92, welche die Haltebereiche 91 flexibel miteinander verbinden. Die Rollenringe 83 sind beispielsweise einstückig aus Kunststoff gefertigt, und weisen eine Innenfläche entsprechend einer Kugelfläche auf, so dass die Kugeln in die Ringe 83 eingeknipst werden können. Die Rollenringe 83 weisen am äusseren Rand eine umlaufende Nut auf, mittels derer sie in kreisförmige Öffnungen von Haltebereichen 91 des Verbindungskörpers 9 eingesetzt sind. Der Verbindungskörper 9 ist vorzugsweise aus einem elastischen Flachmaterial aus Kunststoff oder Gummi oder einem Mischgewebe gefertigt, beispielsweise durch Stanzen oder Wasserstrahlschneiden.

In einer anderen bevorzugten Ausführungsform der Erfindung weist der Verbindungskörper 9 keine schmalen Gelenkbereiche 92 auf, sondern ist ein Band mit gleichbleibender Breite, in welches die Rollen 3 eingesetzt sind.

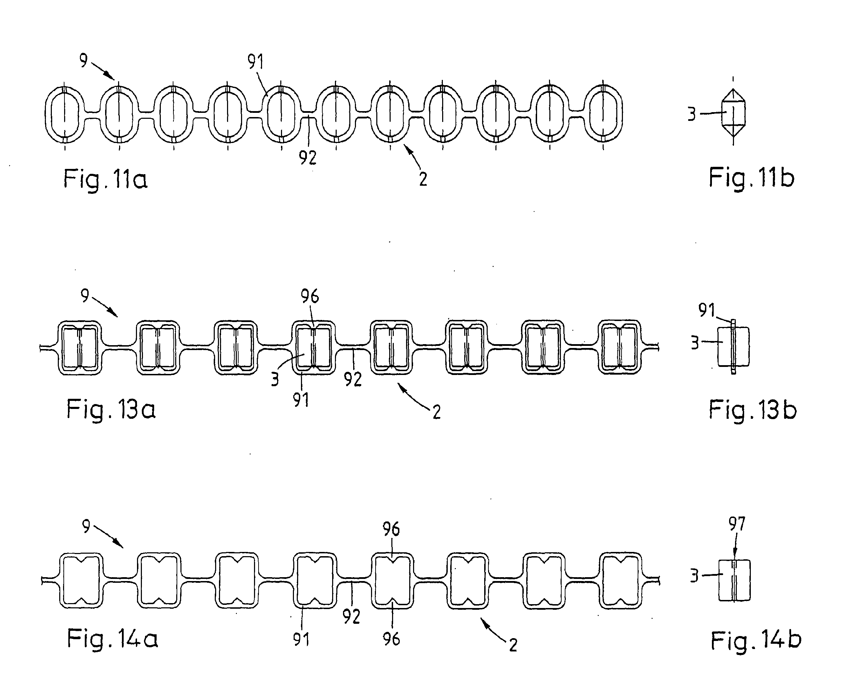

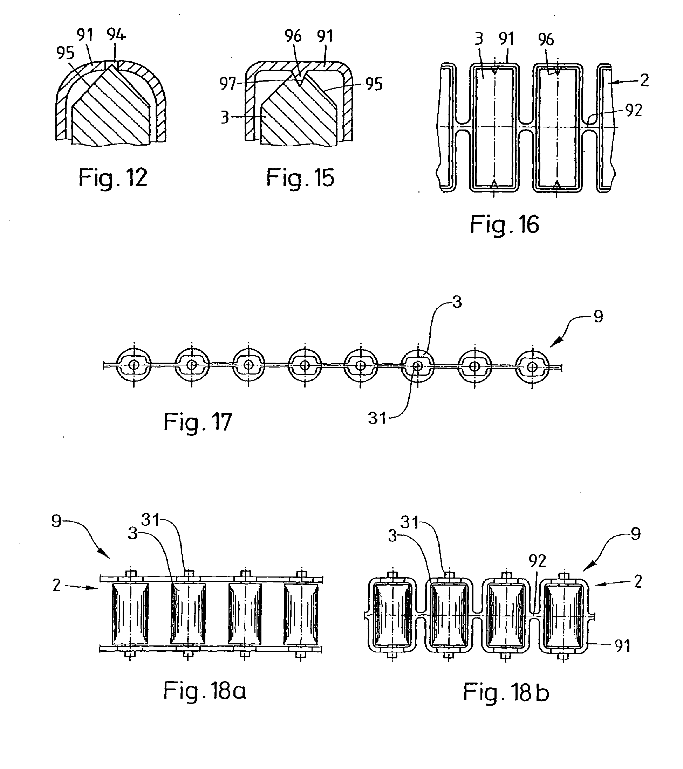

**Figuren 10** bis **18** zeigen Rollenkörper mit walzenförmigen Rollen. **Figuren 10a** und **10b** zeigen einen Rollenkörper 2 in einer Aufsicht **10a** und einem Querschnitt **10b.** **Figuren 11a,** und **11b** zeigen einen Verbindungskörper 9 oder Käfigband und eine walzenförmige Rolle 3. Der Verbindungskörper 9 weist einerseits ringartige Haltebereiche 91 auf, in welche die Rollen 3 eingesetzt sind, und andererseits Gelenkbereiche 92, welche die Haltebereiche 91 flexibel miteinander verbinden. Der Verbindungskörper 9 ist vorzugsweise einstückig und besteht aus einem flexiblen oder elastischen aber nicht weichelastischen Material, beispielsweise einem Kunststoff wie Nylon. Er ist durch Spritzguss oder aus einem Flachmaterial gefertigt, beispielsweise durch Stanzen oder Wasserstrahlschneiden. Die Rollen 3 sind ebenfalls aus Kunststoff oder aber aus Metall, insbesondere Stahl gefertigt. In dieser Ausführungsform der Erfindung sind die Rollen 3 in Achsrichtung konisch und spitz zulaufend, wodurch konische Achselemente 95 gebildet werden, wie in der Detailansicht gemäss der **Figur 12** zu sehen. An den Innenseiten der Haltebereiche 91 sind jeweils einander gegenüberliegend entsprechende Vertiefungen wie z.B. Innenkonusse als Lagerstellen 94 geformt. Diese Innenkonusse bewirken eine Lagerung für die Rollen 3. Anstelle von konischen Elementen kann natürlich auch eine andere Form für die Lagerung verwendet werden, beispielsweise eine zylindrische. Die Verbindung durch die Gelenkbereiche 92 ist, in Laufrichtung der Rollen 3 betrachtet, zumindest annähernd bei der Mitte der Rollen 3 angeordnet. Ein solches Käfigband 9 lässt sich innerhalb einer Ebene senkrecht zu den Rollenachsen biegen, und kann so mit einem Zentralkörper 1 gemäss beispielsweise der **Figur 7** verwendet werden.

Dank der flexiblen und einzigen Verbindung durch die Gelenkbereiche 92 ist der Verbindungskörper 9 aber auch aus dieser Ebene heraus biegbar, so dass der Zentralkörper 1 nicht eine ebene Umlaufbahn aufweisen muss. Ferner ist das Käfigband 9 durch die Gelenkbereiche 92 tordierbar und somit kann auch der Rollenkörper 2 einer Bahn, die eine Torsion des Rollenkörpers 2 bedingt, folgen. Ein solcher Rollenkörper 2 lässt sich also vielseitig einsetzen und kann dazu auf einfache Weise in grossen Stückzahlen hergestellt werden.

**Figuren 13** und **14** zeigen einen weiteren Rollenkörper 2 in einer Aufsicht **13a** und einem Querschnitt **13b.** **Figuren 14a,** und **14b** zeigen einen entsprechenden Verbindungskörper 9 oder Käfigband und eine walzenförmige Rolle 3. Diese sind in ähnlicher Weise herstellbar wie jene der Figuren 10 und 11. Für die Herstellung der Rolle 3 ist eine weitere Vereinfachung möglich, da diese durch ihre einfache Form entweder als einzelnes Spritzgussteil oder durch Abschneiden von einem dickwandigen Rohr hergestellt werden kann. Die Rollen 3 weisen in dieser Ausführungsform der Erfindung also zwei Einbuchtungen 97 zur Lagerung auf, wobei diese Einbuchtungen 97 auch durch ein durchgehendes Loch entlang der Rollenachse gebildet sein können. Der Haltebereich 91 des Verbindungskörpers 9 weist gegenüberliegende Lagervorsprünge 96 auf, die beim Einsetzen der Rollen 3 in die Einbuchtungen 97 einschnappen. Um dies zu vereinfachen sind die Lagervorsprünge 96, wie auch die Achselemente 95 der vorherigen Ausführungsform, vorzugsweise sich verjüngend und insbesondere spitz zulaufend ausgestaltet.

**Figur 15** zeigt eine weitere Variante mit einem Lagervorsprung 96 am Haltebereich 91 in einer Detailansicht. **Figur 16** zeigt eine Variante eines Rollenkörpers 2 mit anderen Proportionen. **Figur 17** zeigt eine Variante eines Rollenkörpers 2, bei welcher die Rollen 3 hervorstehende Lagerachsen 31 aufweisen, die in Lageröffnungen des Verbindungskörpers 9 gelagert sind. In einer Variante mit einer Aufsicht gemäss der **Figur 18a** weist der Verbindungskörper 9 zwei separate Hälften oder Lagerbänder auf, welche jeweils die Lagerachsen 31 an beiden Seiten des Rollenkörpers 2 verbinden. Dadurch ist der Rollenkörper 2 als ganzes nur in eine Richtung biegbar. Damit der Rollenkörper 2 nicht auseinanderfällt und gleichwohl der Rollenkörper 2 zusammengesetzt werden kann, liegen die Lagerachsen 31 beispielsweise mit einem Presssitz in den Lagerbändern und sind die Rollen 3 um die Lagerachse 31 lose drehbar. In der Variante gemäss der **Figur 18b** ist wie bei den bisherigen Ausführungsformen eine Biegung in zwei Richtungen sowie eine Torsion respektive Verdrehung möglich. Auch hier können die Lagerachsen 31 mit einem Presssitz im Verbindungskörper 9 befestigt sein. Es können aber auch die Lagerachsen 31 fest an die Rollen 3 angeformt sein und lose in den Haltebereichen 91 des Verbindungskörpers 9 liegen.

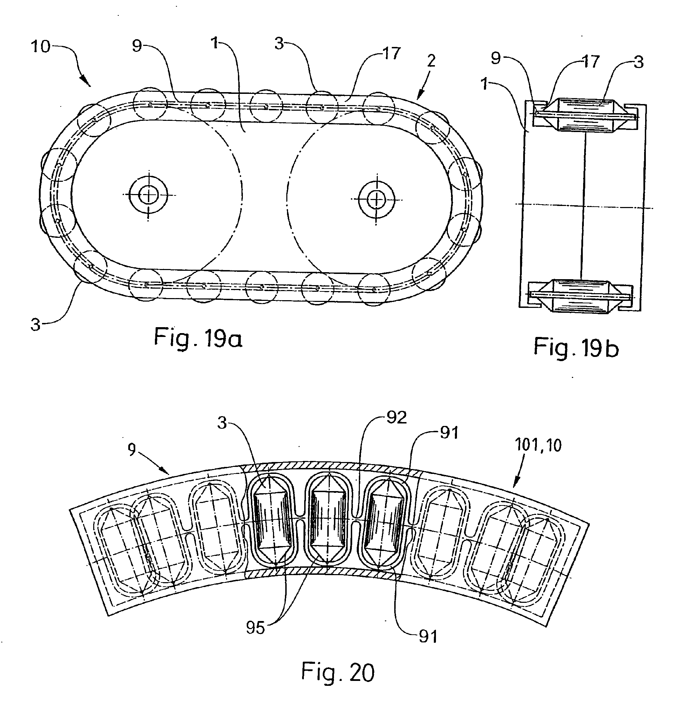

**Figur 19** zeigt ein Rollenelement 10 mit einem Rollenkörper 2 ähnlich jenem der **Figuren 10** und 11. Der Rollenkörper 2 läuft in einer Umlaufbahn 17 um einen Zentralkörper 1 um und erlaubt so ein Abrollen und damit eine Lagerung des Rollenelements 10 bezüglich eines weiteren Körpers.

**Figur 20** zeigt eine Bewegung eines Rollenkörpers 2 in einer gekrümmten Führungsschiene 101, beispielsweise in einem gekrümmten Rollenelement 10. Von der Bewegungsrichtung des Rollenkörpers 2 aus gesehen, ist hier also die Bewegung der Rollen 3 in zwei Richtungen senkrecht zueinander und zur Bewegungsrichtung gekrümmt.

Grundsätzlich sind die verschiedenen gezeigten Varianten von Käfigbändern 9, Rollenformen, Rollenlagerungen, Rollenelementen etc. in vielfältiger Weise miteinander kombinierbar und modifizierbar.

### Bezugszeichenliste

- 1: Zentralkörper
- 10: Rollenelement
- 12: geradliniger Abschnitt
- 14: Lagernut
- 16: innere Kante der Lagernut
- 17: Förderbahn
- 2: Rollenkörper
- 22: Innenseite
- 3: Rolle
- 31: Lagerachse
- 5: Gegenkörper
- 82: Auflagekörper
- 83: Rollenring
- 9: Käfigband
- 91: Haltebereich
- 92: Gelenkbereich

- 94: Lagerstelle
- 95: Achselement
- 96: Lagervorsprung
- 97: Einbuchtung, Bohrung
- 100: Fördervorrichtung
- 101: Führungsschiene
- 102: Förderkörper
- 103: Seele
- 104: Gelenkausbuchtung
- 105: Gelenkeinbuchtung
- 106: erste Abschrägung
- 107: zweite Abschrägung
- 108: Führungsnut
- 109: Führungsvorsprung

## Patentansprüche

1. **Fördervorrichtung** (100) aufweisend mehrere Förderkörper (102), welche über mehrere Rollen (3) an einer Führung (101) abrollen, wobei die Förderkörper (102) Mittel (104, 105) zur gegenseitigen Abstützung aufweisen, welche eine Bewegung der Förderkörper (102) aus der Führung (101) verhindern,
wobei die Mittel (104, 105) zur gegenseitigen Abstützung ineinanderpassende Ausformungen an den Förderkörpern (102) sind, **dadurch gekennzeichnet, dass** die ineinanderpassenden Ausformungen (104, 105) ein Auseinanderziehen der Förderkörper (102) in der Förderrichtung zulassen, und
dass die Mittel zur gegenseitigen Abstützung (104, 105) kugelförmige oder zylinderförmige Gelenkausbuchtungen (104) respektive Gelenkeinbuchtungen (105) sind.

2. Fördervorrichtung (100) gemäss Anspruch 1, **dadurch gekennzeichnet, dass** die Rollen (3) durch einen flexiblen Verbindungskörper (9) miteinander verbunden und voneinander beabstandet sind.

3. Fördervorrichtung (100) gemäss Anspruch 2, **dadurch gekennzeichnet, dass** ein Verbindungskörper (9) und zugeordnete Rollen (3) einen Rollenkörper (2) bilden, und der Rollenkörper (2) entlang der Förderrichtung durchschnittlich zwei oder weniger als zwei Rollen (3) pro Förderkörper (102) aufweist.

4. Fördervorrichtung (100) gemäss einem der vorherigen Ansprüche, **dadurch gekennzeichnet, dass** die Mittel (104, 105) zur gegenseitigen Abstützung flexible Verbindungen zwischen den Förderkörpern (102) sind, insbesondere eine durch eine Mehrzahl von Förderkörpern (102) führende Seele (103).

5. Fördervorrichtung (100) gemäss Anspruch 1, **dadurch gekennzeichnet, dass** die ineinanderpassenden Ausformungen (104, 105) der Förderkörper (102) ein Zylindergelenk oder ein Kugelgelenk bilden.

6. Fördervorrichtung (100) gemäss einem der Ansprüche 1 bis 5, **dadurch gekennzeichnet, dass** sie zwei Rollenkörper (2) aufweist, welche Rollenkörper (2) in einer Ebene im wesentlichen parallel zu beiden Seiten der Förderkörper (102) verlaufen, wobei die Mittel (104, 105) zur gegenseitigen Abstützung eine Relativbewegung der Förderkörper (102) senkrecht zu dieser Ebene verhindern.

7. Fördervorrichtung (100) gemäss Anspruch 6, **dadurch gekennzeichnet, dass** die Führung (101) eine Krümmung aus der genannten Ebene heraus aufweist, und bei einem Übergang zwischen einem geraden Abschnitt und einem gekrümmten Abschnitt (s2) mit einem bestimmten Kurvenradius einen Zwischenabschnitt (s1) mit einem grösseren Kurvenradius aufweist.

8. Fördervorrichtung (100) gemäss einem der vorherigen Ansprüche, **dadurch gekennzeichnet, dass** der Verbindungskörper (9) aufweist Haltebereiche (91), in welche die Rollen (3) eingesetzt sind, und Gelenkbereiche (92), welche die Haltebereiche (91) flexibel miteinander verbinden.

9. **Förderkörper** (102) zur Verwendung in einer Folge von umlaufend geförderten Förderkörpern (102) in einer Fördervorrichtung (100), aufweisend Mittel zur gegenseitigen Abstützung (103; 104, 105) an einem weiteren, gleich geformten Förderkörper (102),
welche Mittel zur gegenseitigen Abstützung (103; 104, 105) ein Einknicken einer Folge von Förderkörpern (102) in mindestens eine Richtung senkrecht zur Förderrichtung verhindern, wenn die Förderkörper (102) gegeneinander gedrückt sind, **dadurch gekennzeichnet,**
**dass** die Mittel zur gegenseitigen Abstützung (104, 105) kugelförmige oder zylinderförmige Gelenkausbuchtungen (104) respektive Gelenkeinbuchtungen (105) sind und ein Auseinanderziehen der Förderkörper (102) in der Förderrichtung zulassen.

10. Förderkörper (102) gemäss Anspruch 9, **dadurch gekennzeichnet, dass** er derart ausgebildet ist, dass zur gegenseitigen Abstützung von Förderkörpern (102) eine flexible Seele (103) durch den Förderkörper (102) und benachbarte Förderkörper (102) führbar ist.
